# EUROPEAN PATENT APPLICATION

(11) **EP 4 335 315 A2**
(43) Date of publication of application: **13.03.2024**
(21) Application number: 23213348.8
(22) Date of filing: 17.12.2021
(51) Int. Cl.: A24F 40/53

(54) **INHALER DEVICE, DISPLAY DEVICE, DISPLAY METHOD, AND PROGRAM**

(30) Priority: 28.04.2021 JP 2021075849
(62) Divisional of application: 21939388.1
(71) Applicant: Japan Tobacco, Inc., Tokyo, 105-6927 (JP)
(72) Inventor: YOSHIDA, Ryo, Sumida-ku, Tokyo, 130-8603 (JP); AOYAMA, Tatsunari, Sumida-ku, Tokyo, 130-8603 (JP); KAWANAGO, Hiroshi, Sumida-ku, Tokyo, 130-8603 (JP); NAGAHAMA, Toru, Sumida-ku, Tokyo, 130-8603 (JP); FUJIKI, Takashi, Sumida-ku, Tokyo, 130-8603 (JP)
(74) Representative: Hoffmann Eitle

(57) **Abstract**

Provided is a display device including multiple display elements arranged in a row to display a state of an apparatus during operation of the apparatus, and a controller that, when an error has occurred in the apparatus, executes control to display the occurrence of the error with the multiple display elements.

## Description

### Technical Field

The present invention relates to an inhaler device, a display device, a display method, and a program.

### Background Art

Patent Literature (PTL) 1 discloses an aerosol generating device in which, when a notifier receives an error signal generated by a controller based on data corresponding to a malfunction occurred in a power supply, light and/or sounds, for example, are output in response to the error signal. PTL 1 further discloses that the notifier may be, for example, a light-emitting device such as an LED, and that the controller controls, according to the error signal, the notifier to change the number of times at which blue and red lights are alternately blinked.

Patent Literature (PTL) 2 discloses an aerosol generating device in which a controller generates an error signal depending on the situation or the cause of a non-normal state and controls a notifier to issue a notification according to the error signal. PTL 2 describes that the notifier may be, for example, a light-emitting diode and may be disposed, for example, around an upstream end portion of a power supply unit or a power supply button in a circumferential direction, and that the controller controls, according to details of processing to detect the non-normal state, the notifier to change the number of times at which emission of warm color light and emission of cold color light are alternately blinked.

### Citation List

### Patent Literature

PTL 1: Japanese Unexamined Patent Application Publication No. 2020-68762
PTL 2: Japanese Unexamined Patent Application Publication No. 2020-68690

### Summary of Invention

### Technical Problem

A state of an apparatus during operation of the apparatus includes, for example, a level of the remaining battery capacity or a battery charge state. When such a state is to be displayed, the state can be easily recognized by arranging multiple display elements in a row and displaying up to which one of the multiple display elements the state has progressed.

There are various types of errors occurring in the apparatus. In trying to, when an error has occurred in the apparatus, display the occurrence of the error, the multiple display elements arranged in a row can display the error in various forms and can make a user easily recognize the occurrence of the error.

If the configuration that the multiple display elements are not arranged in a row is used to display the state of the apparatus during operation of the apparatus and the occurrence of the error in the apparatus, the state of the apparatus and the occurrence of the error cannot be displayed in an easily recognizable fashion.

An object of the present invention is to display a state of an apparatus during operation of the apparatus and the occurrence of an error in the apparatus in an easily recognizable fashion.

### Solution to Problem

The present invention provides an inhaler device including a heater that heats a substrate retaining an aerosol source with electric power from a battery and generates an aerosol, multiple display elements arranged in a row to display a state of the inhaler device during operation of the inhaler device, and a controller that, when an error has occurred in the inhaler device, executes control to display the occurrence of the error with the multiple display elements.

The controller may execute control to display the occurrence of the error with the multiple display elements in a display mode corresponding to a type of the error.

In the above case, the display mode corresponding to the type of the error may include a display mode of blinking all or part of the multiple display elements.

In the above case, the display mode corresponding to the type of the error may include a display mode of turning on all or part of the multiple display elements for a preset period and then turning off the all or part of the multiple display elements for a preset period.

In the above case, the display mode corresponding to the type of the error may include a display mode of turning on a first part and a second part of the multiple display elements and turning off a third part of the multiple display elements. Furthermore, the first part may include one among the multiple display elements at one end thereof, and the second part may include one among the multiple display elements at the other end thereof.

In the above case, the type of the error may include at least one of an error type at a level of issuing a warning in a system of the inhaler device and an error type representing that a temperature of the inhaler device is outside a preset temperature range. Furthermore, when a manipulation for heating the aerosol source is performed in a state in which the error has occurred, the controller may execute control to display the occurrence of the error with the multiple display elements.

In the above case, the type of the error may include an error type that is unrecoverable even with any manipulations on the inhaler device and with the elapse of time. Furthermore, when electric power is supplied from the outside in a state in which the error has occurred, the controller may execute control to display the occurrence of the error with the multiple display elements.

In the above case, the type of the error may include an error type representing that a member for protecting the inhaler device is removed. Furthermore, when a manipulation for shifting to an inhibited state is performed in a state in which the error has occurred, the controller may execute control to display the occurrence of the error with the multiple display elements.

The operation may be at least one among an operation of heating the substrate, an operation of generating the aerosol to be inhaled, an operation of making notification of the remaining capacity of the battery, and an operation of charging the battery.

The present invention further provides a display device including multiple display elements arranged in a row to display a state of an apparatus during operation of the apparatus, and a controller that, when an error has occurred in the apparatus, executes control to display the occurrence of the error with the multiple display elements.

The controller may execute control to display the occurrence of the error with the multiple display elements in a display mode corresponding to a type of the error.

The present invention further provides a display method including the steps of displaying a state of an apparatus during operation of the apparatus with multiple display elements arranged in a row, and displaying, when an error has occurred in the apparatus, the occurrence of the error with the multiple display elements.

The present invention still further provides a program causing a computer to implement the functions of displaying a state of an apparatus during operation of the apparatus with multiple display elements arranged in a row, and displaying, when an error has occurred in the apparatus, the occurrence of the error with the multiple display elements.

### Advantageous Effects of Invention

According to the present invention, it is possible to display the state of the apparatus during the operation of the apparatus and to display, when an error has occurred in the apparatus, the occurrence of the error in an easily recognizable fashion.

### Brief Description of Drawings

[Fig. 1] Figs. 1(a) and 1(b) are each an overall perspective view of an inhaler device according to an embodiment of the present invention.
[Fig. 2] Figs. 2(a) and 2(b) are external views of a panel and a body housing of the inhaler device, respectively, according to the embodiment of the present invention.
[Fig. 3] Fig. 3 is a schematic diagram illustrating a configuration example of the inhaler device according to the embodiment of the present invention.
[Fig. 4] Figs. 4(a) to 4(e) illustrate a display example of LEDs when the inhaler device performs an operation of preliminarily heating a stick substrate.
[Fig. 5] Figs. 5(a) to 5(e) illustrate a display example of the LEDs when the inhaler device performs an operation of generating an aerosol to be inhaled.
[Fig. 6] Figs. 6(a) to 6(e) illustrate a display example of the LEDs when the inhaler device performs an operation of making notification of a remaining battery capacity.
[Fig. 7] Figs. 7(a) to 7(e) illustrate a display example of the LEDs when the inhaler device performs an operation of charging a rechargeable battery.
[Fig. 8] Fig. 8 illustrates a display example in an all-blinking mode of the LEDs in the event of a system error.
[Fig. 9] Fig. 9 illustrates a display example in an animation mode of the LEDs in the event of a temperature error.
[Fig. 10] Fig. 10 illustrates a display example in a partially turned-off mode of the LEDs in the event of a permanent failure error.
[Fig. 11] Fig. 11 illustrates a display example in a partial-blinking mode of the LEDs in the event of a panel error.
[Fig. 12] Fig. 12 is a flowchart illustrating an operation example of a controller in the inhaler device according to the embodiment of the present invention in the event of the system error or the temperature error.
[Fig. 13] Fig. 13 is a flowchart illustrating an operation example of the controller in the inhaler device according to the embodiment of the present invention in the event of the permanent failure error.
[Fig. 14] Fig. 14 is a flowchart illustrating an operation example of the controller in the inhaler device according to the embodiment of the present invention in the event of the panel error.

### Description of Embodiments

An embodiment of the present invention will be described in detail below with reference to the drawings.

### [External Configuration Example of Inhaler Device]

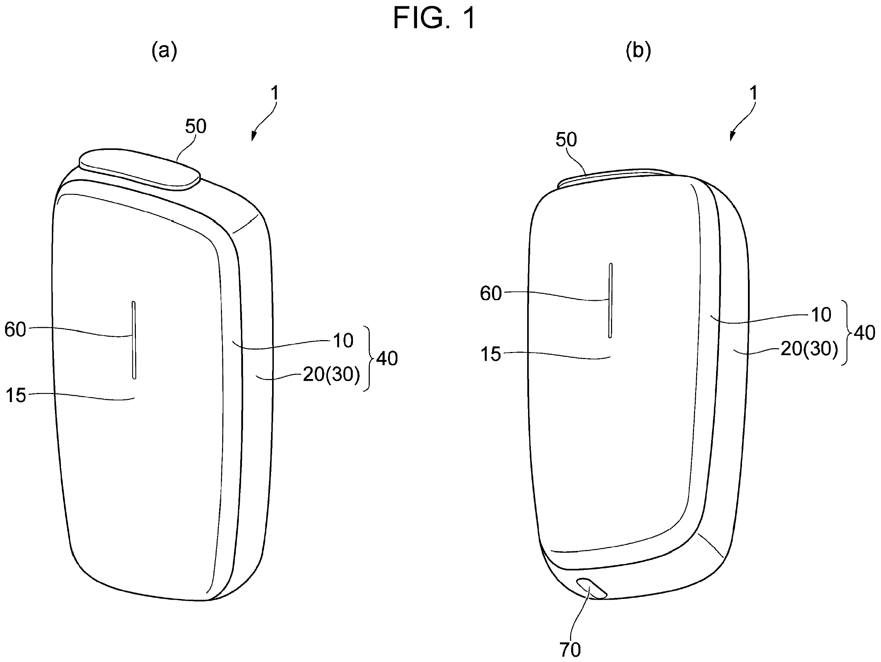

Figs. 1(a) and 1(b) are each an overall perspective view of an inhaler device 1 according to an embodiment. Fig. 1(a) is the overall perspective view when viewed from above obliquely, and Fig. 1(b) is the overall perspective view when viewed from below obliquely. As illustrated, the inhaler device 1 includes a panel 10, a body housing 20 to and from which the panel 10 can be attached and detached, and a shutter 50. The panel 10 and the body housing 20 are constituted by separate members. The panel 10 includes a display window 60 formed in its surface and made of a transparent material. The body housing 20 accommodates a body 30 of the inhaler device 1. The body housing 20 includes an external connection terminal 70 such as a connector of USB Type C.

An outermost housing 40 of the inhaler device 1 is constituted by attaching the panel 10 to the body housing 20. Because of including the panel 10, the inhaler device 1 can suppress heat dissipation to the outside when the body 30 generates heat. In other words, the panel 10 has the function of insulating the heat generated from a heater in the body 30. Furthermore, the panel 10 is formed to have a substantially curved surface. When the panel 10 is attached to the body housing 20, the panel 10 defines an internal space in combination with a surface of the body housing 20.

The housing 40 preferably has a size to be fitted to a user's hand. The user holds the inhaler device 1 by one hand while touching the surface of the panel 10 with fingertips. When the user depresses the surface of the panel 10 by the fingertips, the panel 10 is deformed to form a dent toward the body housing 20. As a result of the deformation of the panel 10, a protrusion formed on the panel 10 comes into contact with a manipulation button disposed on the surface of the body housing 20, whereupon the manipulation button is depressed. Thus, a portion of the surface of the panel 10, the portion being depressed by the fingertips, forms a button region 15.

In trying to deform the panel 10, the user needs to depress the button region 15 by using, for example, multiple fingertips at the same time. This implies, for example, the necessity of applying a larger depressing force than that needed when the user depresses one button disposed to protrude on the housing surface by one finger. In other words, the inhaler device 1 according to this embodiment is advantageous in avoiding an unintended erroneous manipulation by the user, including the case in which the manipulation button is erroneously depressed in a bag. Furthermore, because the button region 15 of the panel 10 cannot be easily depressed with a depressing force applied by a child who is not appropriate as the user of the inhaler device 1, the inhaler device 1 is further advantageous in ensuring tamper proof (child resistance).

The body housing 20 has an opening through which a stick substrate is inserted. However, Fig. 1 illustrates a state in which the opening is closed by the shutter 50. The shutter 50 includes a slide mechanism and is movable along an outer shell surface between a first position at which the shutter 50 closes the opening and a second position at which the opening is open. An open/closed state of the opening can be detected by disposing one or more sensors (not illustrated) near the first position and/or the second position. For instance, a magnet is disposed on the shutter 50, and the open/closed state of the opening is detected by a magnetic sensor.

With the user putting the finger on the shutter 50 and sliding the shutter 50 along a side surface, the opening is opened. When the opening is open, the user can insert the stick substrate through the opening. After inserting the stick substrate, the user can turn on a power supply of the inhaler device 1 by pushing the surface of the panel 10 with the fingers and by depressing the manipulation button.

### [External Configuration Examples of Panel and Body Housing]

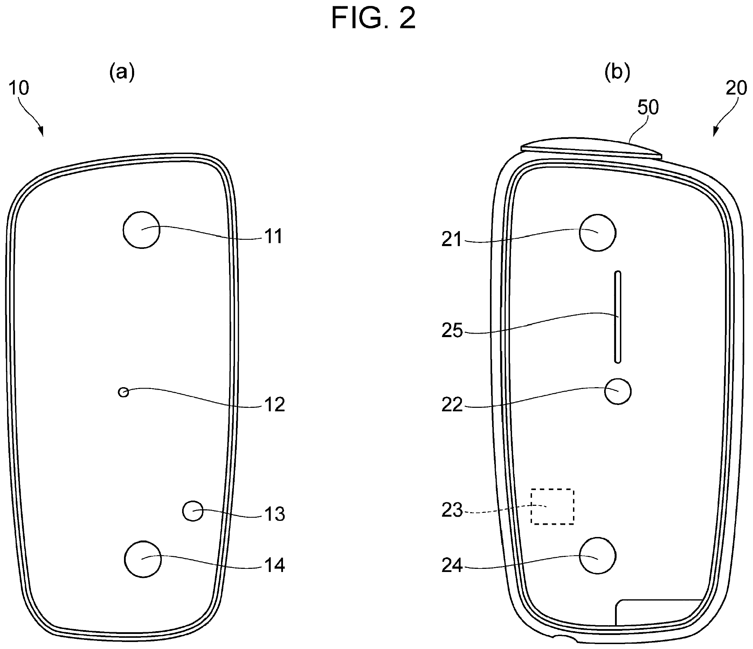

Figs. 2(a) and 2(b) are appearance views of the panel 10 and the body housing 20 of the inhaler device 1, respectively. Fig. 2(a) illustrates an appearance of an inner surface of the panel 10, and Fig. 2(b) illustrates an appearance of an outer surface of the body housing 20. In a state in which the panel 10 is attached to the body housing 20, the inner surface of the panel 10 and the outer surface of the body housing 20 face each other.

As illustrated in Fig. 2(a), a magnet 11, a protrusion 12, a magnet 13, and a magnet 14 are disposed on the inner surface of the panel 10 along a lengthwise direction. When the panel 10 is attached to the body housing 20, the panel 10 is attracted to the body housing 20 due to magnetic forces (magnetic attraction forces) of the magnet 11 and the magnet 14. As a result, the panel 10 is held on the body housing 20. The protrusion 12 depresses a manipulation button 22 disposed on the surface of the body housing 20. The magnet 13 is constituted as a portion for applying a magnetic field to a sensor in the body 30. In other words, a magnetic sensor 23 in the body housing 20 detects a magnetic force of the magnetic field applied from the magnet 13, whereby the panel 10 is detected.

As illustrated in Fig. 2(b), a magnet 21, a through-hole 25, the manipulation button 22, and a magnet 24 are disposed on the outer surface of the body housing 20 along a lengthwise direction from a side closer to the shutter 50. The magnetic sensor 23 is further disposed substantially at an inner surface of the body housing 20 (more exactly speaking, on a substrate located at a substantially zero distance relative to the inner surface of the body housing 20) at a position between the manipulation button 22 and the magnet 24 along the lengthwise direction. The magnet 21, the manipulation button 22, the magnetic sensor 23, and the magnet 24 on the body housing 20 correspond to the magnet 11, the protrusion 12, the magnet 13, and the magnet 14 on the panel 10, respectively. Thus, the former components are aligned with and face to the latter components, respectively, when the panel 10 is attached to the body housing 20.

The magnet 21 and the magnet 24 on the body housing 20 are attracted respectively to the magnet 11 and the magnet 14 on the panel 10 due to their magnetic forces (magnetic attraction forces). In other words, the magnets 11 and 21 and the magnets 14 and 24 attract each other, respectively, whereby the panel 10 can be attached to and held on the body housing 20. The magnets 11 and 14 on the panel 10 and the magnets 21 and 24 on the body housing 20 are preferably formed of permanent magnets.

The manipulation button 22 is disposed on the surface of the body housing 20 to which the panel 10 is attached. In other words, when the panel 10 is attached to the body housing 20, the manipulation button 22 is covered with the panel 10 and is depressed by the protrusion 12 on the panel 10. This enables the inhaler device 1 to be switched between power-on and power-off, for example.

The magnetic sensor 23 detects the magnetic force due to the magnetic field applied from the magnet 13 on the panel 10. The magnetic sensor 23 is preferably a Hall sensor formed of a Hall element. The attachment of the panel 10 to the body housing 20 can be detected by using such a magnetic sensor.

The magnetic sensor 23 in the body housing 20 is disposed such that, in a state in which the panel 10 is attached to the body housing 20, the magnetic sensor 23 faces the magnet 13 on the panel 10 with the inner surface of the body housing 20 interposed therebetween. In other words, when the panel 10 is attached to the body housing 20, a distance between the magnetic sensor 23 in the body housing 20 and the magnet 13 on the panel 10 is minimum.

Furthermore, the magnetic sensor 23 in the body housing 20 is constituted not to detect the magnetic fields generated by the two magnets 21 and 24 on the body housing 20. In more detail, the magnetic sensor 23 is preferably disposed substantially at the inner surface of the body housing 20 at a position spaced from the two magnets 21 and 24 on the outer surface of the body housing 20. With such an arrangement, the influences of the magnetic fields from those two magnets 21 and 24 upon the magnetic sensor 23 can be made substantially zero.

In addition, a distance between the magnetic sensor 23 and the magnet 24 (or the magnet 21) in the body housing 20 is preferably set to be longer than a distance between the magnet 13 and the magnetic sensor 23 in the state in which the panel 10 is attached to the body housing 20. With that arrangement, when the attachment of the panel 10 to the body housing 20 is to be detected, it is just needed to appropriately consider only the influence of the magnetic field from the magnet 13 upon the magnetic sensor 23 without taking into consideration the influence of the magnetic field from the magnet 24 upon the magnetic sensor 23.

The through-hole 25 is an opening aligned with one or more light emitting diodes (LEDs) disposed inside the body 30 and allows light from the LEDs to pass therethrough and to reach the display window 60 of the panel 10. Thus, the user can visually recognize the light at the outer surface of the panel 10.

### [Configuration Example of Inhaler Device]

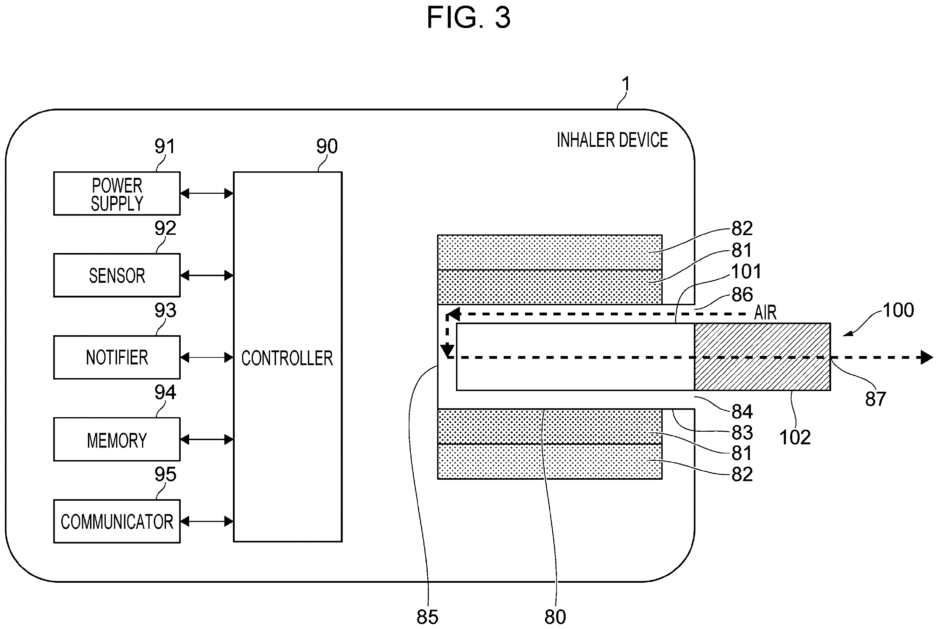

Fig. 3 is a schematic diagram illustrating a configuration example of the inhaler device 1. A stick substrate 100 including a flavor generating substrate, for example, a filler containing inhalation component sources such as an aerosol source and a flavor source, is inserted into the inhaler device 1. The aerosol source is not limited to a liquid and may be a solid. The inserted stick substrate 100 generates an aerosol containing flavor when the stick substrate 100 is heated from its outer circumference.

As illustrated in Fig. 3, the inhaler device 1 includes a controller 90, a power supply 91, a sensor 92, a notifier 93, a memory 94, a communicator 95, a holder 80, a heater 81, and a heat insulator 82. Those constituent elements of the inhaler device 1 are contained inside the body 30 illustrated in Fig. 1.

The controller 90 functions as an arithmetic processing unit and a control device and controls various operations in the inhaler device 1 in accordance with various programs. The controller 90 is realized with, for example, an electronic circuit such as a central processing unit (CPU) or a microprocessor.

The power supply 91 accumulates electric power. The power supply 91 supplies the electric power to the structural elements of the inhaler device 1 under control of the controller 90. The power supply 91 may be constituted by, for example, a rechargeable battery such as a lithium ion secondary battery.

The sensor 92 obtains various items of information related to the inhaler device 1. As an example, the sensor 92 is constituted by a pressure sensor such as a microphone capacitor, a flow sensor, a temperature sensor, or the like, and obtains a value related to inhalation by the user. As another example, the sensor 92 is constituted by an input device, such as a button or a switch, for accepting an entry of information from the user.

Furthermore, the sensor 92 detects the attachment of the panel to the body housing. The sensor 92 is constituted by, for example, a magnetic sensor (e.g., a Hall sensor with a Hall element detecting magnetism based on the Hall effect). The sensor 92 detects a state that the panel with a magnetic field applier (e.g., a magnet and/or a magnetic body) for applying a magnetic field to the magnetic sensor is present near the sensor 92.

The notifier 93 notifies the user of information. The notifier 93 is constituted by, for example, display elements formed of light-emitting elements such as LEDs, a display device for displaying an image, a sound output device for outputting sounds, or a vibration device causing vibration.

For instance, an LED makes notification of operation information of the inhaler device 1 with a predetermined light-emitting mode. In more detail, the LED emits light to notify the user of whether the inhaler device 1 is in a power-on state, the progress of preliminary heating, an inhalation situation (such as a remaining inhalable time), or the current operation mode of the inhaler device 1 (e.g., an inhalation mode and/or a communication mode).

The memory 94 stores various items of information necessary for operating the inhaler device 1. The memory 94 is constituted by, for example, a non-volatile storage medium such as a flash memory. The memory 94 further stores not only computer-executable commands for operating the inhaler device 1, but also programs and so on, such as firmware.

The communicator 95 is a communication interface through which communications in conformity with appropriate wired or wireless communication standards can be performed. In the case of wireless communication, Wi-Fi (registered trademark) or Bluetooth (registered trademark), for example, may be used as the communication standards. In the case of wired communication, a data communication cable, for example, is connected via the external connection terminal 70. Thus, data related to the operation of the inhaler device 1 is input from and/or output to an external device.

The communicator 95 may activate the communication function upon the opening 84 of the shutter 50 being opened and may start communication with an external terminal in accordance with Bluetooth (registered trademark), for example. The communicator 95 may end the on-going communication with the external terminal upon the opening 84 of the shutter 50 being closed. Bluetooth (registered trademark) connection between the communicator 95 and the external terminal is particularly desirable to be implemented as connection with Bluetooth low energy (BLE).

The holder 80 has an internal space 83 and holds the stick substrate 100 while part of the stick substrate 100 is accommodated in the internal space 83. The holder 80 has the opening 84 through which the internal space 83 is communicated with the outside, and it holds the stick substrate 100 having been inserted into the internal space 83 through the opening 84. For instance, the holder 80 is a tubular body with the opening 84 and a bottom surface at a bottom 85 and defines the internal space 83 in a pillar shape. In this specification, a direction in which the stick substrate 100 is inserted into the internal space 83 is assumed to be a lengthwise direction of the inhaler device 1.

The holder 80 includes a pressing portion and a not-pressing portion (both not illustrated) that are positioned in an inner wall of the internal space 83 along the lengthwise direction. Upon the internal space 83 receiving the stick substrate 100, the pressing portion presses the stick substrate 100 in a direction perpendicular to the lengthwise direction. The stick substrate 100 is held by the holder 80 in a sandwiched fashion while the stick substrate 100 is pressed by the pressing portion to be deformed. As a result, the stick substrate 100 is heated by the heater 81 from its outer circumference in a state pressed by the pressing portion.

On the other hand, a gap (not illustrated) is formed between the not-pressing portion and the stick substrate 100. Accordingly, the opening 84 and the bottom 85 are communicated with each other through the gap.

The holder 80 further has the function of defining a flow path of air supplied to the stick substrate 100. An air inlet hole 86 serving as an inlet for air flowing into the flow path is part of the opening 84. More exactly speaking, the air inlet hole 86 is a gap between the non-pressing portion and the stick substrate 100. Air flowing into the flow path through the air inlet hole 86 with the inhalation by the user is conveyed along an arrow denoted by a dotted line through the stick substrate 100 to an air outlet hole 87 that is an outlet for the air going out from the flow path.

The stick substrate 100 includes a substrate 101 and an inhalation port 102. The substrate 101 includes an aerosol source. In a state in which the stick substrate 100 is held by the holder 80, at least part of the substrate 101 is accommodated in the internal space 83, and at least part of the inhalation port 102 protrudes from the opening 84. When the user holds the inhalation port 102 protruding from the opening 84 in a mouth and inhales, air flows into the internal space 83 from the air inlet hole 86, is conveyed along the arrow denoted by the dotted line to the air outlet hole 87 of the inhalation port 102 through the bottom 85, and then reaches the inside of an oral cavity of the user together with the aerosol generated from the substrate 101. The stick substrate 100 is an example of a substrate retaining the aerosol source.

The heater 81 generates the aerosol by heating the aerosol source and atomizing the aerosol source. The heater 81 is in the form of a film and is disposed to cover an outer circumference of the holder 80. When the heater 81 generates heat, the substrate 101 of the stick substrate 100 is heated from its outer circumference, and the aerosol is generated. The heater 81 generates heat with supply of electric power from the power supply 91. In an example, the supply of electric power may be started when the sensor 92 detects that the user has started the inhalation, that a predetermined input manipulation by the user has been received, and/or that predetermined information has been input. The supply of electric power may be stopped when the sensor 92 detects that the user has ended the inhalation, that a predetermined input manipulation by the user has been received, and/or that predetermined information has been input. The heater 81 is an example of a heater that heats a substrate with electric power from a battery and generates an aerosol.

The heat insulator 82 suppresses heat conduction from the heater 81 to the other structural elements. The heat insulator 82 is made of, for example, a vacuum heat insulator or an aerogel heat insulator.

The configuration example of the inhaler device 1 has been described above. Of course, the configuration of the inhaler device 1 is not limited to the above-described one, and the inhaler device 1 may have a variety of configurations described, by way of example, below.

As an example, the heater 81 may be constituted in a blade shape and may be disposed to protrude into the internal space 83 from the bottom 85 of the holder 80. In that case, the blade-shaped heater 81 is inserted into the substrate 101 of the stick substrate 100 and heats the substrate 101 of the stick substrate 100 from an inner side. As another example, the heater 81 may be disposed to cover the bottom 85 of the holder 80. Alternatively, the heater 81 may be constituted in combination of two or more among a first heater covering the outer circumference of the holder 80, a blade-shaped second heater, and a third heater covering the bottom 85 of the holder 80.

A manner of atomizing the aerosol source is not limited to the heating by the heater 81. The manner of atomizing the aerosol source may be, for example, induction heating.

### [Summary of Operation of Inhaler Device]

According to this embodiment, in the inhaler device 1 described above, the notifier 93 is composed of multiple display elements that are arranged in a row to display the state of the inhaler device during the operation of the inhaler device. When an error has occurred in the inhaler device, the controller 90 executes control to display the occurrence of the error with the multiple display elements.

Here, the above-described operation is an ordinary operation and may be at least one among an operation of heating the stick substrate 100, an operation of generating the aerosol to be inhaled, an operation of making notification of the remaining capacity of the rechargeable battery of the power supply 91, and an operation of charging the rechargeable battery of the power supply 91.

The controller 90 may execute control to display the occurrence of an error with the multiple display elements in a display mode corresponding to a type of the error.

In the above case, the type of the error may first include an error type at a level of issuing a warning in a system of the inhaler device. The type of the error may secondly include an error type representing that a temperature of the inhaler device is outside a preset temperature range. The type of the error may thirdly include an error type representing that the error is unrecoverable even with any manipulations on the inhaler device and with the elapse of time. The type of the error may fourthly include an error type representing that a member for protecting the inhaler device is removed.

Furthermore, in the above case, the display mode corresponding to the error type may first include a display mode of blinking all or part of the multiple display elements. The display mode corresponding to the error type may secondly include a display mode of turning on all or part of the multiple display elements for a preset period and then turning off the all or part of the multiple display elements for a preset period. The display mode corresponding to the error type may thirdly include a display mode of turning on a first part and a second part of the multiple display elements and turning off a third part of the multiple display elements.

Here, it is assumed that the multiple display elements are the number N of LEDs (N is a natural number).

The error type at the level of issuing a warning in the system of the inhaler device is referred to as a "system error". That error type may be referred to as an "alarm error" because it represents an error type at the level of issuing a warning, but the wording "system error" is used here throughout. The error type representing that the temperature of the inhaler device is outside the preset temperature range is referred to as a "temperature error". The error type representing that the error is unrecoverable even with any manipulations on the inhaler device and with the elapse of time is referred to as a "permanent failure error". The error type representing that the member for protecting the inhaler device is removed is referred to as a "panel error", taking the panel 10 as an example of the member for protecting the inhaler device. It is, however, to be noted that the member for protecting the inhaler device is not limited to the panel 10 and may be any other member.

Moreover, the display mode of blinking all the number N of LEDs is referred to as an "all-blinking mode". The display mode of blinking part of the number N of LEDs is referred to as a "partial blinking mode". The display mode of turning on all or part of the number N of LEDs for the preset period and then turning off the all or part of the number N of LEDs for the preset period is referred to as an "animation mode". The display mode of turning on the first part and the second part of the number N of LEDs and turning off the third part of the number N of LEDs is referred to as a "partially turned-off mode".

Thus, the error types include the system error, the temperature error, the permanent failure error, and the panel error. The display modes corresponding to the error types include the all-blinking mode, the partial blinking mode, the animation mode, and the partially turned-off mode. If the error types and the display modes are correlated with each other, any one display mode may be used, in the event of any one type of error, to display the occurrence of the error. The following description is made on an assumption of the correlation below. When the system error has occurred, the occurrence of the system error is displayed by the number N of LEDs in the all-blinking mode. When the temperature error has occurred, the occurrence of the temperature error is displayed by the number N of LEDs in the animation mode. When the permanent failure error has occurred, the occurrence of the permanent failure error is displayed by the number N of LEDs in the partially turned-off mode. When the panel error has occurred, the occurrence of the panel error is displayed by the number N of LEDs in the partial blinking mode.

### [Practical Examples of Ordinary Operation of Inhaler Device]

The operation of preliminarily heating the stick substrate 100, the operation of generating the aerosol to be inhaled, the operation of making notification of the remaining capacity of the rechargeable battery of the power supply 91, and the operation of charging the rechargeable battery of the power supply 91 are described as examples of the ordinary operation of the inhaler device 1.

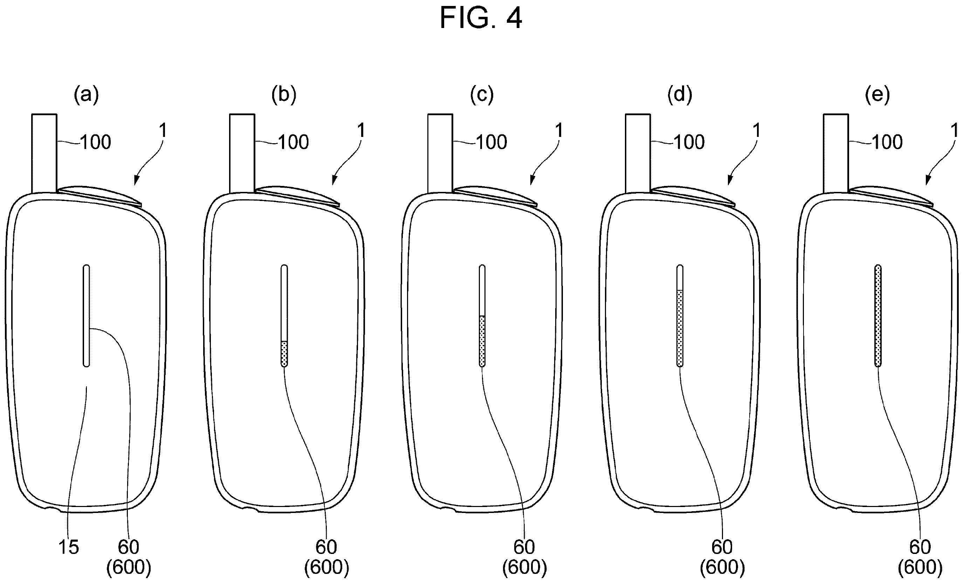

Figs. 4(a) to 4(e) illustrate a display example of the number N of LEDs 600 appearing through the display window 60 when the inhaler device 1 performs the operation of preliminarily heating the stick substrate 100. Here, the operation of preliminarily heating the stick substrate 100 is an example of the operation of heating the stick substrate 100.

Prior to preliminarily heating the stick substrate 100, as illustrated in Fig. 4(a), the number N of LEDs 600 are all turned off. When the user pushes the button region 15 for several seconds in the above state, the inhaler device 1 starts the operation of preliminarily heating the stick substrate 100.

After the inhaler device 1 starts the operation of preliminarily heating the stick substrate 100, the number N of LEDs 600 are successively turned on from the lowermost one of the turned-off LEDs. By gradually increasing the number of turned-on LEDs, the progress of the preliminary heating is displayed. For instance, Fig. 4(b) represents a display state after the elapse of 1/4 of a preliminary heating time, and 1/4 of the number N of LEDs 600 are turned on. Fig. 4(c) represents a display state after the elapse of 2/4 of the preliminary heating time, and 2/4 of the number N of LEDs 600 are turned on. Fig. 4(d) represents a display state after the elapse of 3/4 of the preliminary heating time, and 3/4 of the number N of LEDs 600 are turned on. Fig. 4(e) represents a display state at the end of the preliminary heating time, and the number N of LEDs 600 are all turned on.

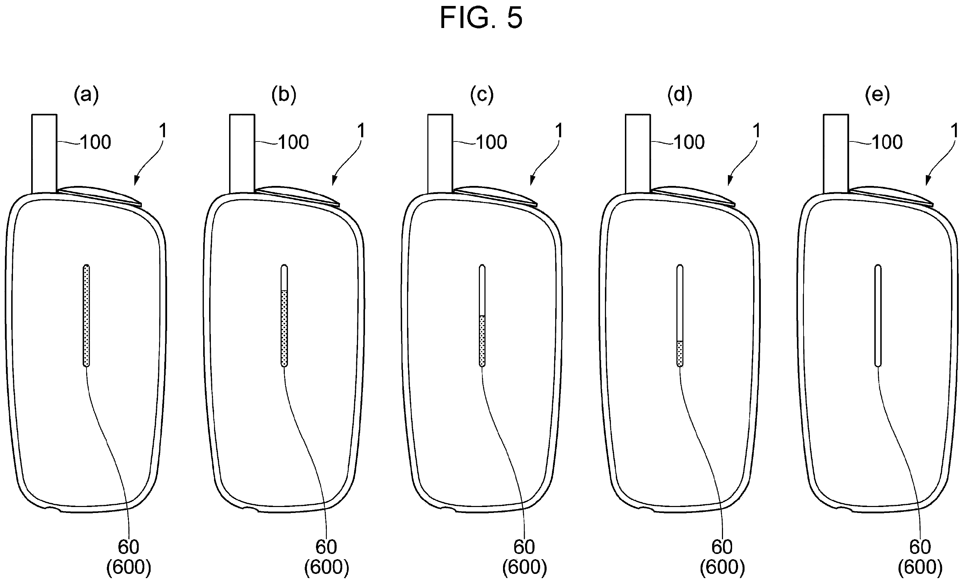

Figs. 5(a) to 5(e) illustrate a display example of the number N of LEDs 600 appearing through the display window 60 when the inhaler device 1 performs the operation of generating the aerosol to be inhaled.

Prior to generating the aerosol to be inhaled, as illustrated in Fig. 5(a), the number N of LEDs 600 are all turned on. In this state, the inhaler device 1 starts the operation of generating the aerosol with the heating of the stick substrate 100 to be inhaled by the user.

After the inhaler device 1 starts the operation of generating the aerosol to be inhaled, the number N of LEDs 600 are successively turned off from the uppermost one of the turned-on LEDs. By gradually reducing the number of turned-on LEDs, the progress of reduction of the remaining inhalable time is displayed. For instance, Fig. 5(b) represents a display state after the elapse of 1/4 of the inhalable time, and 3/4 of the number N of LEDs 600 are turned on. Fig. 5(c) represents a display state after the elapse of 2/4 of the inhalable time, and 2/4 of the number N of LEDs 600 are turned on. Fig. 5(d) represents a display state after the elapse of 3/4 of the inhalable time, and 1/4 of the number N of LEDs 600 are turned on. Fig. 5(e) represents a display state at the end of the inhalable time, and the number N of LEDs 600 are all turned off.

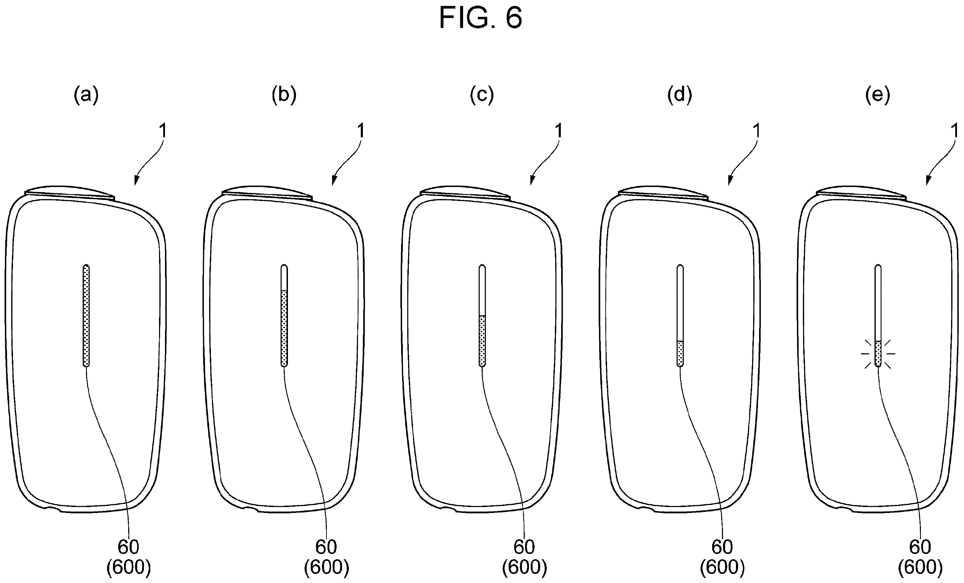

Figs. 6(a) to 6(e) illustrate a display example of the number N of LEDs 600 appearing through the display window 60 when the inhaler device 1 performs the operation of making notification of the remaining capacity of the rechargeable battery (hereinafter referred to as the "remaining battery capacity") of the power supply 91.

When the remaining battery capacity of the power supply 91 is 100%, as illustrated in Fig. 6(a), the number N of LEDs 600 are all turned on. In this state, the inhaler device 1 starts using of the rechargeable battery.

After the inhaler device 1 starts using of the rechargeable battery, the number N of LEDs 600 are successively turned off from the uppermost one of the turned-on LEDs. By gradually reducing the number of turned-on LEDs, the progress of reduction of the remaining battery capacity is displayed. For instance, Fig. 6(b) represents a display state when the remaining battery capacity has reduced to 75%, and 3/4 of the number N of LEDs 600 are turned on. Fig. 6(c) represents a display state when the remaining battery capacity has reduced to 50%, and 2/4 of the number N of LEDs 600 are turned on. Fig. 6(d) represents a display state when the remaining battery capacity has reduced to 25%, and 1/4 of the number N of LEDs 600 are turned on. Fig. 6(e) represents a display state when the remaining battery capacity has reduced to a capacity enough for allowing the user to inhale only one more stick substrate 100, and part of the number N of LEDs 600 that are positioned on the lower side are blinking.

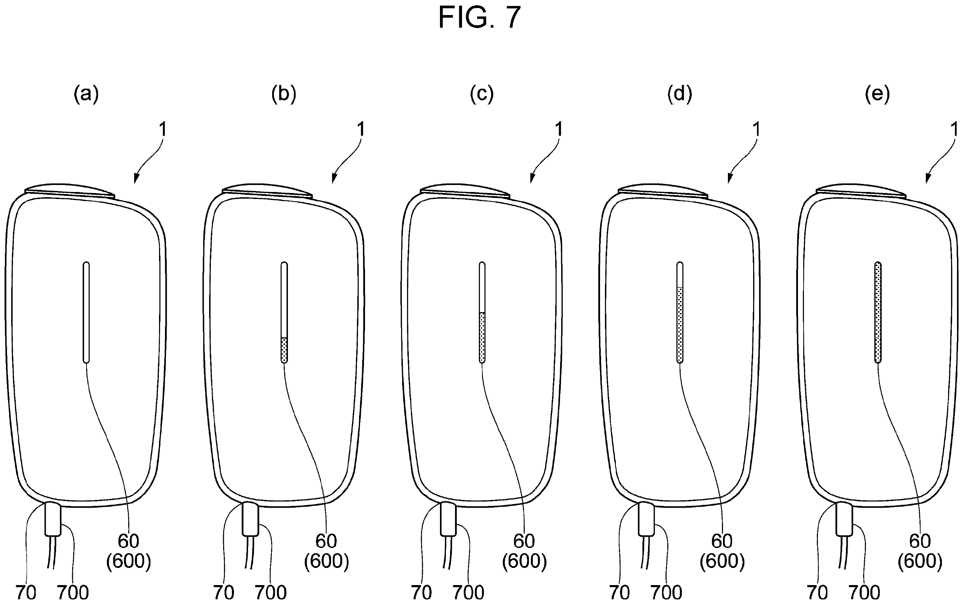

Figs. 7(a) to 7(e) illustrate a display example of the number N of LEDs 600 appearing through the display window 60 when the inhaler device 1 performs the operation of charging the rechargeable battery of the power supply 91.

Prior to charging the rechargeable battery, as illustrated in Fig. 7(a), the number N of LEDs 600 are all turned off. In this state, when the user connects a USB cable 700 to the external connection terminal 70, the inhaler device 1 starts the operation of charging the rechargeable battery.

After the inhaler device 1 starts the operation of charging the rechargeable battery, the number N of LEDs 600 are successively turned on from the lowermost one of the turned-off LEDs. By gradually increasing the number of turned-on LEDs, the progress of charging of the rechargeable battery is displayed. For instance, Fig. 7(b) represents a display state after the charging of the rechargeable battery up to 25%, and 1/4 of the number N of LEDs 600 are turned on. Fig. 7(c) represents a display state after the charging of the rechargeable battery up to 50%, and 2/4 of the number N of LEDs 600 are turned on. Fig. 7(d) represents a display state after the charging of the rechargeable battery up to 75%, and 3/4 of the number N of LEDs 600 are turned on. Fig. 7(e) represents a display state at the end of the charging of the rechargeable battery, and the number N of LEDs 600 are all turned on.

### [Practical Examples of Operation in Event of Error in Inhaler Device]

Operation performed by the inhaler device 1 when an error has occurred is described, by way of example, in connection with operations in the event of the system error, the temperature error, the permanent failure error, and the panel error. In the following, eight LEDs arranged in a vertical row are taken as an example of the number N of LEDs 600, and those eight LEDs are successively denoted by LED #8, LED #7, ... LED #1 from the top.

First, a practical example of the operation in the event of the system error is described. The system error is the alarm error. In that sense, the system error is an example of the error type at the level of issuing a warning in the system of the inhaler device.

The system error includes an error that the heater 81 is abnormally heated and its temperature becomes too high. The system error further includes an error that a resistance value of the heater 81 becomes abnormal. Here, the wording "the resistance value of the heater 81 becomes abnormal" indicates a situation that the resistance value of the heater 81 is low, namely that the heater 81 comes into an almost circuit-shorted state, or a situation that the resistance value of the heater 81 is high, namely that the heater 81 comes into an almost disconnected state. The system error further includes an error that a voltage applied to the heater 81 becomes abnormal, namely that the voltage becomes too high or low.

If the system error occurs when the user performs the manipulation for heating the aerosol source retained in the stick substrate 100, the controller 90 displays the occurrence of the system error with the eight LEDs 600. Here, the manipulation for heating the aerosol source is, for example, the manipulation of opening the shutter 50, or the manipulation of depressing the button region 15. The system error is released with the user performing a hardware reset.

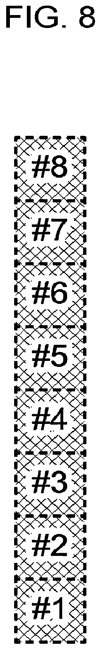

Fig. 8 illustrates a display example in the all-blinking mode of the eight LEDs 600 in the event of the system error. In this case, the controller 90 blinks all the LEDs #1 to #8 at an ultrahigh speed as indicated by cross-hatching in thick solid-line frames. In this specification, the wording "blink a LED at an ultrahigh speed" indicates that the LED is blinked at a period of 200 msec. However, the blinking period is not limited to such a value, and the ultrahigh-speed blinking of the LED may be performed by blinking the LED at a period other than the period of 200 msec.

Next, a practical example of the operation in the event of the temperature error is described. The temperature error is an example of the error type that the temperature of the inhaler device is outside the preset temperature range.

If the temperature error occurs when the user performs the manipulation for heating the aerosol source retained in the stick substrate 100, the controller 90 displays the occurrence of the temperature error with the eight LEDs 600. Here, the manipulation for heating the aerosol source is, for example, the manipulation of opening the shutter 50, or the manipulation of depressing the button region 15. When a temperature state changes and the temperature of the inhaler device reaches an operable level, the temperature error is released.

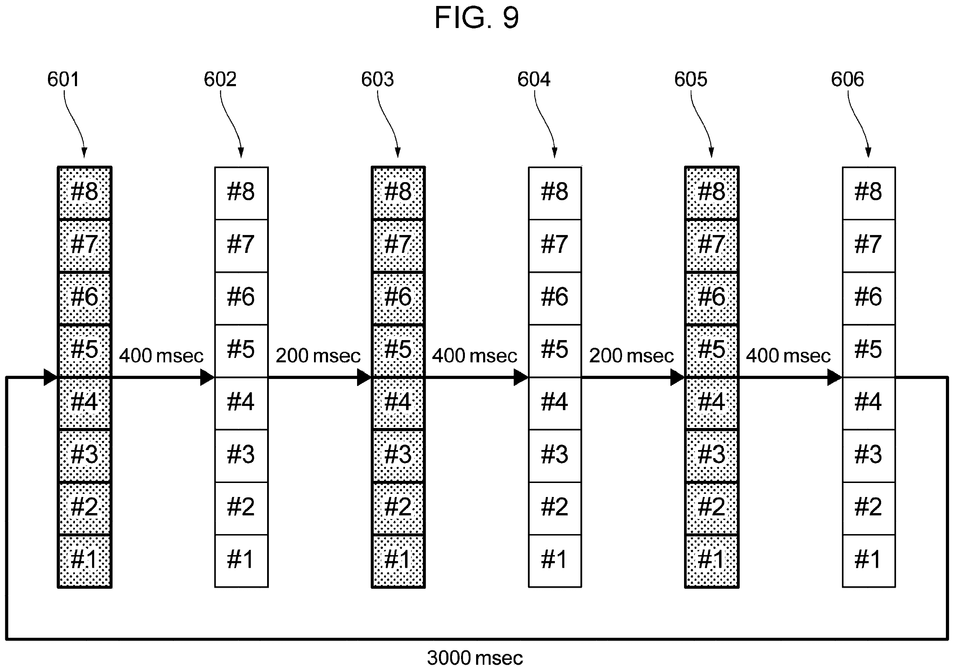

Fig. 9 illustrates a display example in the animation mode of the eight LEDs 600 in the event of the temperature error.

As illustrated, the controller 90 first presents a display with the LEDs #1 to #8 in a state 601. In more detail, the controller 90 ordinarily turns on the LEDs #1 to #8 as indicated by dot hatching in thick solid-line frames. Then, after 400 msec, the controller 90 changes the display with the LEDs #1 to #8 to a state 602. In more detail, the controller 90 turns off the LEDs #1 to #8 as indicated by white areas in thin solid-line frames.

After 200 msec, the controller 90 changes the display with the LEDs #1 to #8 to a state 603. In more detail, the controller 90 ordinarily turns on the LEDs #1 to #8 as indicated by dot hatching in thick solid-line frames. Then, after 400 msec, the controller 90 changes the display with the LEDs #1 to #8 to a state 604. In more detail, the controller 90 turns off the LEDs #1 to #8 as indicated by white areas in thin solid-line frames.

After 200 msec, the controller 90 changes the display with the LEDs #1 to #8 to a state 605. In more detail, the controller 90 ordinarily turns on the LEDs #1 to #8 as indicated by dot hatching in thick solid-line frames. Then, after 400 msec, the controller 90 changes the display with the LEDs #1 to #8 to a state 606. In more detail, the controller 90 turns off the LEDs #1 to #8 as indicated by white areas in thin solid-line frames.

After 3000 msec, the controller 90 changes the display with the LEDs #1 to #8 to the state 601 again. In more detail, the controller 90 ordinarily turns on the LEDs #1 to #8 as indicated by the dot hatching in the thick solid-line frames.

Then, the controller 90 repeats three times a display pattern of starting from the state 601 and returning to the state 601 through the states 602 to 606 as described above. In other words, the controller 90 displays the above-described display pattern three times with one pattern cycle of 4600 msec.

In this specification, the wording "ordinarily turn on a LED" indicates that the LED is turned on with a duty ratio of 100%, for example, and the wording "turn off a LED" indicates that the duty ratio of the LED is reduced to 0%.

When the shutter 50 is closed before the end of the above-described display operation, the controller 90 may interrupt the display operation. Furthermore, when the button region 15 is depressed after the end of the above-described display operation while the shutter 50 is open, the controller 90 may repeat the above-described display operation again.

In the above description, all the eight LEDs 600 are turned on for the preset period and then turned off for the preset period, but the present invention is not limited to that example. Part of the eight LEDs 600 may be turned on for a preset period and then turned off for a preset period. In such a case, each time part of the eight LEDs 600 are turned on, the part of the LEDs to be turned on may be changed such that the turned-on LEDs appear to move.

Next, a practical example of the operation in the event of the permanent failure error is described. The permanent failure error is an error that cannot be recovered even with the hardware reset. The permanent failure error is also an error that is not released with the elapse of time unlike the temperature error. In that sense, the permanent failure error is an example of the error type representing that the error is unrecoverable even with any manipulations on the inhaler device and with the elapse of time.

In the event of the permanent failure error, no electric power is supplied from the power supply 91. Thus, when electric power is supplied from the outside in the state in which the permanent failure error has occurred, the controller 90 displays the occurrence of the permanent failure error with the eight LEDs 600. For instance, if the permanent failure error occurs when the inhaler device 1 comes into a not-charging state upon the user connecting a powered USB cable to the external connection terminal 70, the controller 90 displays the occurrence of the permanent failure error with the eight LEDs 600.

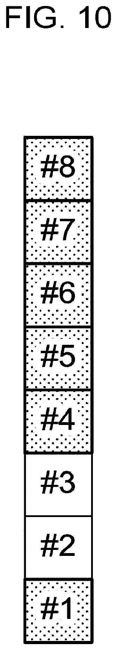

Fig. 10 illustrates a display example in the partially turned-off mode of the eight LEDs 600 in the event of the permanent failure error. In this example, the controller 90 ordinarily turns on the LEDs #1 and #4 to #8 as indicated by dot hatching in thick solid-line frames. On the other hand, the controller 90 turns off the LEDs #2 and #3 as indicated by white areas in thin solid-line frames. The controller 90 continues the above-described display for 5000 msec.

Here, the partially turned-off mode is a display mode of turning on a first part and a second part of the eight LEDs 600 and turning off a third part of the eight LEDs 600. In this case, the first part, the second part, and the third part may be each any part of the eight LEDs 600, but those parts are desirably given as a part including the LED at one end, a part including the LED at the other end, and the remaining part. For instance, in the example of Fig. 10, the controller 90 desirably turns on a part including the LED #1 and a part including the LED #8 while turning off the remaining part. The reason is as follows. If the LED #1 is turned off, this leads to a possibility that the user may regard the LEDs #2 to LED #8 as all the LEDs by mistake. If the LED #8 is turned off, this leads to a possibility that the user may regard the LEDs #1 to LED #7 as all the LEDs by mistake.

More generally speaking, the partially turned-off mode may be given as a display mode of turning on three or more ones of the eight LEDs 600 and turning off the remaining ones sandwiched between turned-on two of the eight LEDs 600. For instance, in the example of Fig. 10, the controller 90 may turn on the LEDs #1, #3, and #5 to #8 and may turn off the LEDs #2 and #4. Alternatively, the controller 90 may turn on the LEDs #1 to #4, #6 and #8 and may turn off the LEDs #5 and #7.

After the end of the display illustrated in Fig. 10, the controller 90 shifts the inhaler device 1 to a sleep mode. Here, the sleep mode is a mode in which most of the functions cannot be used except for the function of detecting, for example, the opening of the shutter 50 and the connection of a USB cable, and the function of monitoring the remaining battery capacity. If the shutter 50 is opened, the button region 15 is depressed, or the panel 10 is removed in the sleep mode, the controller 90 repeats the display illustrated in Fig. 10 again. If the USB cable is removed, the controller 90 shifts the inhaler device 1 to a shipping mode (power-off).

Next, a practical example of the operation in the event of the panel error is described. The panel error is an error that is caused with the panel 10 being removed. The panel 10 is an example of the member for protecting the inhaler device, and the panel error is an example of the error type representing that the member for protecting the inhaler device is removed.

In the event of the panel error, the controller 90 displays the occurrence of the panel error with the eight LEDs 600. In other words, if the panel 10 is removed, the controller 90 displays the removal of the panel 10 with the eight LEDs 600.

Moreover, if a manipulation for shifting to an inhibited state is performed in the state in which the panel error has occurred, the controller 90 displays the occurrence of the panel error with the eight LEDs 600. In the state in which the panel 10 is removed, only the operation of making notification of the remaining battery capacity and the operation of charging the rechargeable battery are enabled. Accordingly, if any other operation for shifting to the inhibited state is instructed, the controller 90 controls the eight LEDs 600 to display that the panel 10 is removed.

Even when the inhaler device 1 is in the sleep mode, the controller 90 accepts detection of the removal of the panel 10 as an interrupt and controls the eight LEDs 600 to display that the panel 10 is removed. When the panel 10 is attached, the panel error is released.

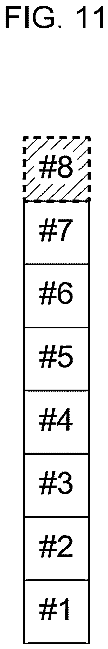

Fig. 11 illustrates a display example in the partial-blinking mode of the eight LEDs 600 in the event of the panel error. In this example, the controller 90 blinks the LED #8 at a high speed as indicated by diagonal hatching in a thick dotted-line frame. In this specification, the wording "blink an LED at a high speed" indicates that the LED is blinked at a period of 500 msec. However, the blinking period is not limited to such a value, and the high-speed blinking of the LED may be performed by blinking the LED at a period other than the period of 500 msec.

Here, the partial-blinking mode is a display mode of blinking part of the eight LEDs 600. In this case, the wording "part of the eight LEDs 600" may be any part of the eight LEDs 600, the part consisting of any number of the LEDs among the eight LEDs 600, and may be any part of the eight LEDs 600, the part being located at any position. For instance, it is conceivable to blink multiple separated parts of the eight LEDs 600 like the partially turned-off mode in the event of the permanent failure error. In the above-described example, however, the LED #8, namely one LED at the top of the eight LEDs 600, is blinked.

### [Details of Operation in Event of Error in Inhaler Device]

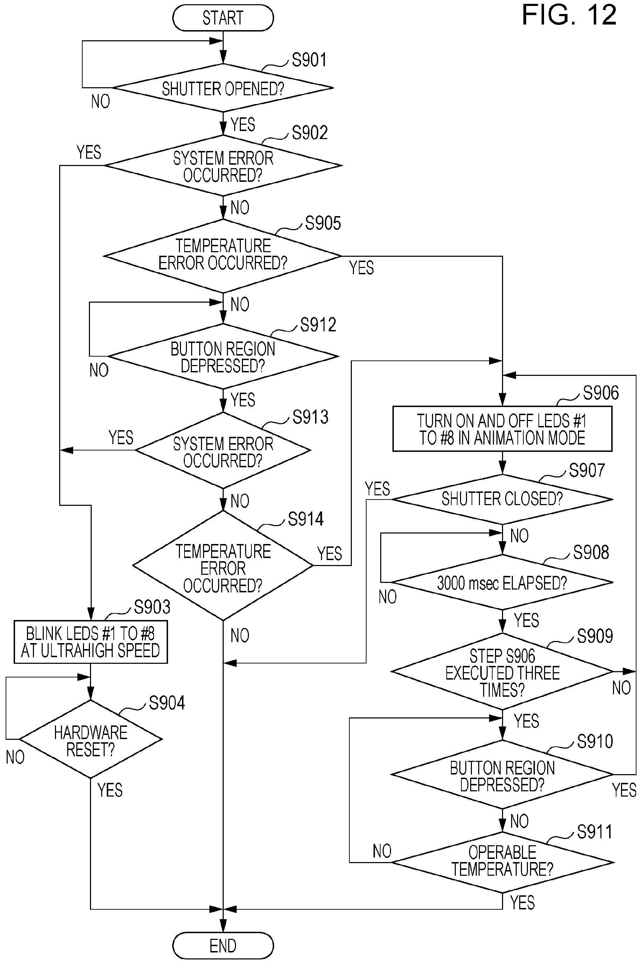

Fig. 12 is a flowchart illustrating an operation example of the controller 90 in the inhaler device 1 according to the embodiment in the event of the system error or the temperature error.

As illustrated, the controller 90 first determines whether the manipulation of opening the shutter 50 has been performed (step 901). If it is not determined that the manipulation of opening the shutter 50 has been performed, the controller 90 repeats step 901. If it is determined in step 901 that the manipulation of opening the shutter 50 has been performed, the controller 90 determines whether the system error has occurred (step 902).

If it is determined in step 902 that the system error has occurred, the controller 90 blinks the LEDs #1 to #8 at an ultrahigh speed (step 903). Then, the controller 90 determines whether the hardware reset has been performed (step 904). If it is not determined that the hardware reset has been performed, the controller 90 repeats step 904. If it is determined in step 904 that the hardware reset has been performed, the system error is released, and hence the controller 90 ends the processing.

On the other hand, if it is not determined in step 902 that the system error has occurred, the controller 90 determines whether the temperature error has occurred (step 905).

If it is determined in step 905 that the temperature error has occurred, the controller 90 turns on and off the LEDs #1 to #8 in the animation mode (step 906). For instance, the controller 90 turns on the LEDs #1 to #8, turns off them after 400 msec, turns on them after 200 msec again, turns off them after 400 msec, turns on them after 200 msec again, and turns off them after 400 msec.

Then, the controller 90 determines whether the manipulation of closing the shutter 50 has been performed (step 907). If it is determined that the manipulation of closing the shutter 50 has been performed, the controller 90 ends the processing without executing step 906 of turning on and off the LEDs in the animation mode again. If it is not determined in step 907 that the manipulation of closing the shutter 50 has been performed, the controller 90 determines whether 3000 msec has elapsed (step 908). If it is not determined that 3000 msec has elapsed, the controller 90 repeats step 908. If it is determined in step 908 that 3000 msec has elapsed, the controller 90 determines whether step 906 has been executed three times (step 909). If it is not determined that step 906 has been executed three times, the controller 90 returns the processing to step 906 and executes step 906 of turning on and off the LEDs in the animation mode again.

If it is determined in step 909 that step 906 has been executed three times, the controller 90 determines whether the manipulation of depressing the button region 15 has been performed (step 910).

If it is determined that the manipulation of depressing the button region 15 has been performed, the controller 90 returns the processing to step 906 and repeats steps 906 to 909. If it is not determined in step 910 that the manipulation of depressing the button region 15 has been performed, the controller 90 determines whether the temperature of the inhaler device has reached the operable temperature (step 911). If it is not determined that the temperature of the inhaler device has reached the operable temperature, the controller 90 returns the processing to step 910. If it is determined in step 911 that the temperature of the inhaler device has reached the operable temperature, the temperature error is released, and hence the controller 90 ends the processing.

On the other hand, if it is not determined in step 905 that the temperature error has occurred, the controller 90 determines whether the manipulation of depressing the button region 15 has been performed (step 912). If it is not determined that the manipulation of depressing the button region 15 has been performed, the controller 90 repeats step 912. If it is determined in step 912 that the manipulation of depressing the button region 15 has been performed, the controller 90 determines whether the system error has occurred (step 913).

If it is determined in step 913 that the system error has occurred, the controller 90 advances the processing to step 903. Details of the processing in step 903 and step 904 have been described above, and hence description of the details of the processing is omitted here.

On the other hand, if it is not determined in step 913 that the system error has occurred, the controller 90 determines whether the temperature error has occurred (step 914).

If it is determined in step 914 that the temperature error has occurred, the controller 90 advances the processing to step 906. Details of the processing in step 906 to step 911 have been described above, and hence description of the details of the processing is omitted here.

On the other hand, if it is not determined in step 914 that the temperature error has occurred, the controller 90 ends the processing.

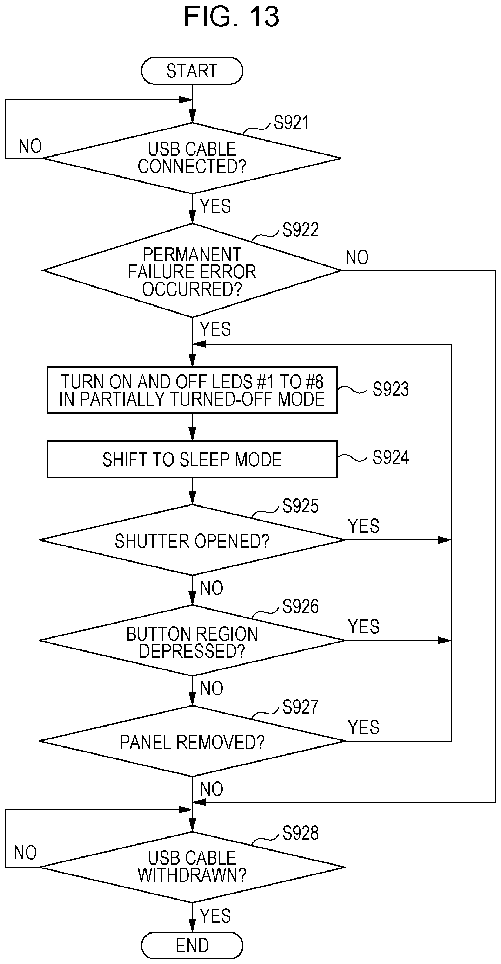

Fig. 13 is a flowchart illustrating an operation example of the controller 90 in the inhaler device 1 according to the embodiment in the event of the permanent failure error.

As illustrated, the controller 90 first determines whether the USB cable 700 has been connected to the external connection terminal 70 (step 921). If it is not determined that the USB cable 700 has been connected to the external connection terminal 70, the controller 90 repeats step 921. If it is determined in step 921 that the USB cable 700 has been connected to the external connection terminal 70, the controller 90 determines whether the permanent failure error has occurred (step 922).

If it is determined in step 922 that the permanent failure error has occurred, the controller 90 turns on and off the LEDs #1 to #8 in the partially turned-off mode (step 923). For instance, the controller 90 turns on the LEDs #1 and #4 to #8 and turns off the LEDs #2 and #3. Then, the controller 90 shifts the inhaler device 1 to the sleep mode (step 924).

Thereafter, the controller 90 determines whether the manipulation of opening the shutter 50 has been performed (step 925). If it is determined that the manipulation of opening the shutter 50 has been performed, the controller 90 returns the processing to step 923 and executes step 923 of turning on and off the LEDs in the partially turned-off mode again.

If it is not determined in step 925 that the manipulation of opening the shutter 50 has been performed, the controller 90 determines whether the manipulation of depressing the button region 15 has been performed (step 926). If it is determined that the manipulation of depressing the button region 15 has been performed, the controller 90 returns the processing to step 923 and executes step 923 of turning on and off the LEDs in the partially turned-off mode again.

If it is not determined in step 926 that the manipulation of depressing the button region 15 has been performed, the controller 90 determines whether the panel 10 has been removed (step 927). If it is determined that the panel 10 has been removed, the controller 90 returns the processing to step 923 and executes step 923 of turning on and off the LEDs in the partially turned-off mode again.

If it is not determined in step 927 that the panel 10 has been removed, the controller 90 determines whether the USB cable 700 has been withdrawn from the external connection terminal 70 (step 928). If it is not determined in step 922 that the permanent failure error has occurred, the controller 90 also determines whether the USB cable 700 has been withdrawn from the external connection terminal 70 (step 928), after executing the ordinary operation of, for example, charging the rechargeable battery of the power supply 91.

If it is not determined in step 928 that the USB cable 700 has been withdrawn from the external connection terminal 70, the controller 90 repeats step 928. If it is determined in step 928 that the USB cable 700 has been withdrawn from the external connection terminal 70, the controller 90 ends the processing. In other words, the controller 90 shifts the inhaler device 1 to the shipping mode.

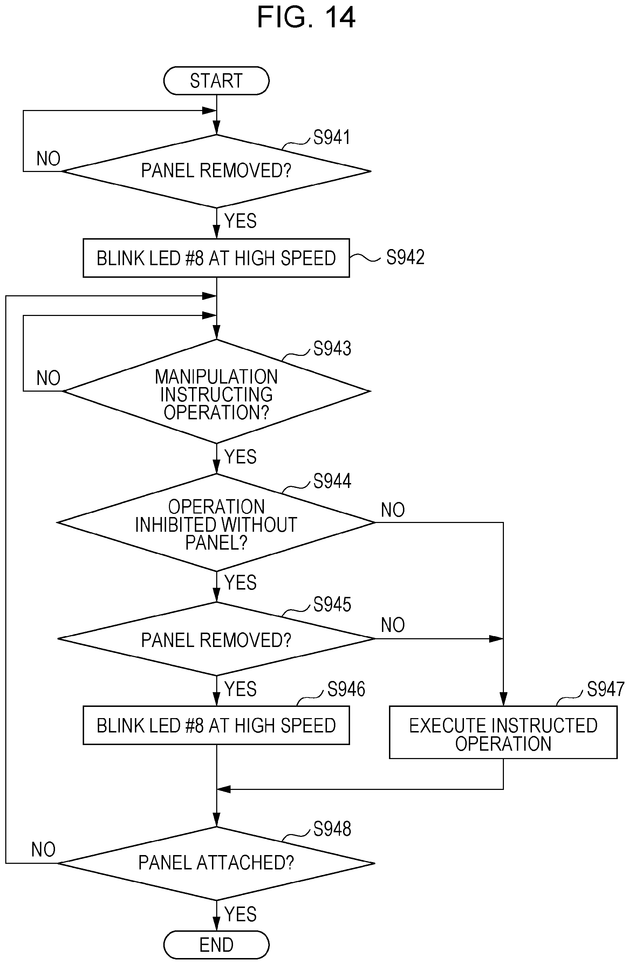

Fig. 14 is a flowchart illustrating an operation example of the controller 90 in the inhaler device 1 according to the embodiment in the event of the panel error.

As illustrated, the controller 90 first determines whether the panel 10 has been removed (step 941). If it is not determined that the panel 10 has been removed, the controller 90 repeats step 941. If it is determined in step 941 that the panel 10 has been removed, the controller 90 blinks the LED #8 at the high speed (step 942).

Then, the controller 90 determines whether a manipulation of instructing any operation has been performed (step 943). If it is not determined that the manipulation of instructing any operation has been performed, the controller 90 repeats step 943. If it is determined in step 943 that the manipulation of instructing any operation has been performed, the controller 90 determines whether the instructed operation is the operation for which execution without the panel 10 is inhibited (step 944). If it is determined that the instructed operation is the operation for which execution without the panel 10 is inhibited, the controller 90 determines whether the panel 10 is removed (step 945). If it is determined that the panel 10 is removed, the controller 90 blinks the LED #8 at the high speed (step 946).

If it is not determined in step 944 that the instructed operation is the operation for which execution without the panel 10 is inhibited, and if it is not determined in step 945 that the panel 10 is removed, the controller 90 executes the instructed operation (step 947).

Thereafter, the controller 90 determines whether the panel 10 has been attached (step 948). If it is not determined that the panel 10 has been attached, the controller 90 returns the processing to step 943. If it is determined in step 948 that the panel 10 has been attached, the controller 90 ends the processing.

### [Modifications]

While the case of applying the present invention to heated tobacco has been described above, the present invention is not limited to that case. The present invention can be further applied to various inhaler devices for generating an aerosol to be inhaled, such as electronic tobacco and a nebulizer. The inhalation component to be generated may include, in addition to the aerosol, gas such as invisible steam. Moreover, the present invention may be applied to a display device connected to an apparatus other than the inhaler device and configured to display information of the apparatus. In such a case, the number N of LEDs 600 are an example of multiple display elements arranged in a row to display a state of the apparatus during operation of the apparatus. Furthermore, the controller 90 is an example of a controller that, when an error has occurred in the apparatus, executes control to display the occurrence of the error with the multiple display elements.

### [Advantageous Effects of Embodiment]

The inhaler device 1 according to this embodiment is configured to display the state of the inhaler device during the operation of the inhaler device with the multiple display elements arranged in a row, and to, when an error has occurred in the inhaler device, display the occurrence of the error with the multiple display elements. According to the embodiment, therefore, it is possible to display the state of the inhaler device during the operation of the inhaler device and to display, when an error has occurred in the inhaler device, the occurrence of the error in an easily recognizable fashion.

### Reference Signs List

- 1: inhaler device
- 10: panel
- 20: body housing
- 30: body
- 40: housing
- 50: shutter
- 60: display window
- 70: external connection terminal
- 80: holder
- 81: heater
- 82: heat insulator
- 90: controller
- 91: power supply
- 92: sensor
- 93: notifier
- 94: memory
- 95: communicator

### Further examples

Further examples of the present application are as follows:
E1. An inhaler device comprising:
   a heater configured to heat a substrate retaining an aerosol source with electric power from a battery to generate an aerosol;
   a plurality of display elements arranged in a row to display a state of the inhaler device during operation of the inhaler device; and
   a controller configured to execute, when an error that is unrecoverable even with any manipulations on the inhaler device has occurred in the inhaler device, control to display occurrence of the error with the plurality of display elements, wherein
   the controller is configured to execute control to display the occurrence of the error with the plurality of display elements in a display mode corresponding to the error.
E2. The inhaler device according to example 1, wherein
   the controller is configured to execute, when electric power is supplied from outside in a state in which the error has occurred, control to display the occurrence of the error with the plurality of display elements.
E3. The inhaler device according to example 1 or 2, wherein
   the error that is unrecoverable even with any manipulations on the inhaler device includes at least an error representing that a temperature of the inhaler device is outside a preset temperature range.
E4. The inhaler device according to any one of examples 1 to 3, wherein the display mode corresponding to the error includes a display mode of blinking all of the plurality of display elements.
E5. The inhaler device according to any one of examples 1 to 4, wherein, when a manipulation for heating the aerosol source is performed in a state in which the error has occurred, the controller executes control to display the occurrence of the error with the plurality of display elements.
E6. The inhaler device according to any one of examples 1 to 5, wherein the operation is at least one among an operation of heating the substrate, an operation of generating the aerosol to be inhaled, an operation of making notification of remaining capacity of the battery, and an operation of charging the battery.
E7. The inhaler device according to any of examples 1 to 6, wherein the manipulation is a manipulation of instructing any operation.

## Claims

1. An inhaler device comprising:
a heater that heats a substrate retaining an aerosol source with electric power from a battery to generate an aerosol;
multiple display elements arranged in a row to display a state of the inhaler device during operation of the inhaler device; and
a controller that, when an error has occurred in the inhaler device, executes control to display occurrence of the error with the multiple display elements.

2. The inhaler device according to claim 1, wherein the controller executes control to display the occurrence of the error with the multiple display elements in a display mode corresponding to a type of the error.

3. The inhaler device according to claim 2, wherein the display mode corresponding to the type of the error includes a display mode of blinking all or part of the multiple display elements.

4. The inhaler device according to claim 2, wherein the display mode corresponding to the type of the error includes a display mode of turning on all or part of the multiple display elements for a preset period and then turning off the all or part of the multiple display elements for a preset period.

5. The inhaler device according to claim 2, wherein the display mode corresponding to the type of the error includes a display mode of turning on a first part and a second part of the multiple display elements and turning off a third part of the multiple display elements.

6. The inhaler device according to claim 5, wherein the first part includes one among the multiple display elements at one end thereof, and
the second part includes one among the multiple display elements at an other end thereof.

7. The inhaler device according to claim 2, wherein the type of the error includes at least one of an error type at a level of issuing a warning in a system of the inhaler device and an error type representing that a temperature of the inhaler device is outside a preset temperature range.

8. The inhaler device according to claim 7, wherein, when a manipulation for heating the aerosol source is performed in a state in which the error has occurred, the controller executes control to display the occurrence of the error with the multiple display elements.

9. The inhaler device according to claim 2, wherein the type of the error includes an error type that is unrecoverable even with any manipulations on the inhaler device and with elapse of time.

10. The inhaler device according to claim 9, wherein, when electric power is supplied from outside in a state in which the error has occurred, the controller executes control to display the occurrence of the error with the multiple display elements.

11. The inhaler device according to claim 2, wherein the type of the error includes an error type representing that a member for protecting the inhaler device is removed.

12. The inhaler device according to claim 11, wherein, when a manipulation for shifting to an inhibited state is performed in a state in which the error has occurred, the controller executes control to display the occurrence of the error with the multiple display elements.

13. The inhaler device according to claim 1, wherein the operation is at least one among an operation of heating the substrate, an operation of generating the aerosol to be inhaled, an operation of making notification of remaining capacity of the battery, and an operation of charging the battery.

14. A display device comprising:
multiple display elements arranged in a row to display a state of an apparatus during operation of the apparatus; and
a controller that, when an error has occurred in the apparatus, executes control to display occurrence of the error with the multiple display elements.

15. The display device according to claim 14, wherein the controller executes control to display the occurrence of the error with the multiple display elements in a display mode corresponding to a type of the error.

16. A display method comprising the steps of:
displaying a state of an apparatus during operation of the apparatus with multiple display elements arranged in a row; and
displaying, when an error has occurred in the apparatus, occurrence of the error with the multiple display elements.

17. A program causing a computer to implement the functions of:
displaying a state of an apparatus during operation of the apparatus with multiple display elements arranged in a row; and
displaying, when an error has occurred in the apparatus, occurrence of the error with the multiple display elements.
